# EUROPÄISCHE PATENTSCHRIFT

(11) **EP 0 753 924 B1**
(45) Veröffentlichungstag und Bekanntmachung des Hinweises auf die Patenterteilung: **08.03.2000**
(21) Anmeldenummer: 96108400.1
(22) Anmeldetag: 28.05.1996
(51) Int. Cl.: H02J 7/14

(54) **Verfahren zur Spannungsversorgung eines Kraftfahrzeugs**
Method for voltage regulation of an automobile
Méthode de régulation de tension d'un véhicule automobile

(30) Priorität: 14.07.1995 DE 19525697
(43) Veröffentlichungstag der Anmeldung: 15.01.1997
(73) Patentinhaber: Bayerische Motoren Werke Aktiengesellschaft, 80788 München (DE)
(72) Erfinder: Klauer, Norbert, 85778 Haimhausen (DE); Schleich, Manfred, 82110 Germering (DE)

(56) Entgegenhaltungen:
- DE-A- 3 729 968
- DE-A- 4 112 987
- PATENT ABSTRACTS OF JAPAN vol. 018, no. 137 (E-1518), 7.März 1994 & JP 05 316666 A (NIPPONDENSO CO LTD), 26.November 1993,
- PATENT ABSTRACTS OF JAPAN vol. 017, no. 121 (E-1331), 12.März 1993 & JP 04 299034 A (FUJITSU TEN LTD), 22.Oktober 1992,

## Beschreibung

Die Erfindung bezieht sich auf den Verfahren mit den Merkmalen des Oberbegriffs von Patentanspruch 1.

Bei einem derartigen bekannten Verfahren wird auf den gemessenen Entladestrom des Akkumulators abgestellt (DE 37 29 968 C). Die Fixierung allein auf die momentane Situation läßt die Beanspruchung des Akkumulators im jeweils zurückliegenden Zeitraum außer Betracht. Der Kraftstoffverbrauch des Motors ist lediglich die Folge des Versuchs, die Ladebilanz ausgeglichen zu gestalten. Damit aber wird dem Bedürfnis, den Kraftstoffverbrauch des Motors möglichst gering zu halten, nicht Rechnung getragen.

Der Erfindung liegt die Aufgabe zugrunde, ein Verfahren der eingangs genannten Art zu schaffen, dessen primäres Ziel die Absenkung des Kraftfstoffverbrauchs ist und bei dem zusätzlich der Betriebszustand des Akkumulators berücksichtigt wird.

Die Erfindung löst diese Aufgabe durch die kennzeichnenden Merkmale des Patentanspruchs 1.

Im Gegensatz zum bekannten Verfahren ist nunmehr die primäre Zielrichtung die Verringerung des Kraftstoffverbrauchs. Die Leerlaufdrehzahl wird abgesenkt, solange der Ladezustand des Akkumulators dies zuläßt. Dies geschieht auch dann, wenn die Ladebilanz negativ ist, d.h. der Entladestrom den Ladestrom des Akkumulators übersteigt. Voraussetzung hierbei ist die Berücksichtigung der Belastung des Akkumulators im zurückliegenden Zeitraum. Grundüberlegung ist dabei, daß bei einer Betriebsweise des Kraftfahrzeugs, bei dem sich ein optimaler Ladezustand des Akkumulators einstellt, eine anschließende negative Ladebilanz des Akkumulators ohne weiteres akzeptiert werden kann, solange der Ladezustand einen kritischen Schwellwert nicht unterschreitet. Wird das Kraftfahrzeug beispielsweise über einen Zeitraum von einer Stunde oder mehr mit hoher Geschwindigkeit betrieben und sind währenddessen nur wenige elektrische Verbraucher eingeschaltet, so liegt mit hoher Sicherheit ein optimaler Ladezustand des Akkumulators vor. Ein anschließender Leerlaufbetrieb des Kraftfahrzeugs, typischerweise eine Stadtfahrt nach vorausgegangener Autobahnfahrt mit einer häufigen Folge von Ampelstops kann dann mit möglichst niedrigerer Leerlaufdrehzahl während dieser Leerlaufbetriebsphasen auch dann erfolgen, wenn während dieser Leerlaufphasen eine negative Ladebilanz auftritt. Der optimal geladene Akkumulator "verkraftet" derartige Ladedefizite problemlos. Die Folge ist ein entsprechend niedriger Kraftstoffverbrauch, was sich wiederum in einer deutlich geringeren Umweltbelastung bemerkbar macht.

Unter der Annahme, es liege ein Ladedefizit vor, so kann die Leerlaufdrehzahl unter verschiedenen Alternativen und/oder sich ergänzenden Bedingungen angehoben werden. Eine dieser Möglichkeiten, das Unterschreiten eines entsprechenden Schwellwerts für den Ladezustand wurde bereits beschrieben. Weitere Möglichkeiten sind der Ablauf einer vorgegebenen Zeitspanne, während der ein Ladebilanzdefizit auftritt. Dieses Defizit kann zwischenzeitlichen Ladungsüberschüssen, wie sie im Fahrbetrieb des Kraftfahrzeugs zumeist auftreten, gegenüber gestellt werden.

Eine weitere Möglichkeit besteht darin, als ergänzendes Kriterium die Akkumulatorspannung selbst zu berücksichtigen. Sinkt diese unter einen vorgegebenen Wert, bei einem 12 V-Bordnetz auf beispielsweise 11,5 V, so kann eine Anhebung der Leerlaufdrehzahl auch dann erfolgen, wenn die Ladebilanz selbst noch nicht eine Drehzahlanhebung notwendig macht. Damit ergibt sich eine zusätzliche Absicherung des erfindungsgemäßen Verfahrens für den Fall eines nicht vollständig leistungsfähigen Akkumulators.

Ein weiteres Kriterium für die Ermittlung der Ladebilanz kann auch die Temperatur des Akkumulators, die direkt durch einen Temperaturfühler im oder am Akkumulator oder indirekt aus der Motor- oder der Ansauglufttemperatur bestimmt werden kann.

Die Ladebilanz selbst kann durch Informationen über die eingeschalteten Verbraucher bestimmt werden. Ein geeignetes Verfahren, das ohne Strommessung arbeitet und lediglich auf eine Gegenüberstellung von Zählfrequenzen basiert, die sich aus der Summe von den einzelnen Verbrauchern individuell zugeordneten Entlade-Zählfrequenzen zusammensetzt und einer entsprechenden Lade-Zählfrequenz gegenübergestellt wird, ist beispielsweise aus der DE 41 12 987 C2 bekannt. Selbstverständlich kann die Ladebilanz auch über eine Strommessung für den Lade- und Entladestrom bestimmt werden, wie sie aus der DE 37 29 968 A1 bekannt ist.

Die Auswertung der Information über die eingeschalteten Verbraucher kann auch über einen Datenbus an ein Generator-Steuergerät geliefert werden, an den die Verbraucher und der Generator angeschlossen sind.

Anhand von Diagrammen, aus denen die wesentlichen funktionellen Zusammenhänge zu entnehmen sind, ist die Erfindung weiter erläutert. Es zeigt
- Fig. 1: Diagramme zur prinzipiellen Erläuterung der Erfindung und
- Fig. 2: wiederum mehrere Diagramme zur Erläuterung, in welcher Weise sich die Akkumulatorentemperatur auf das erfindungsgemäße Verfahren auswirkt.

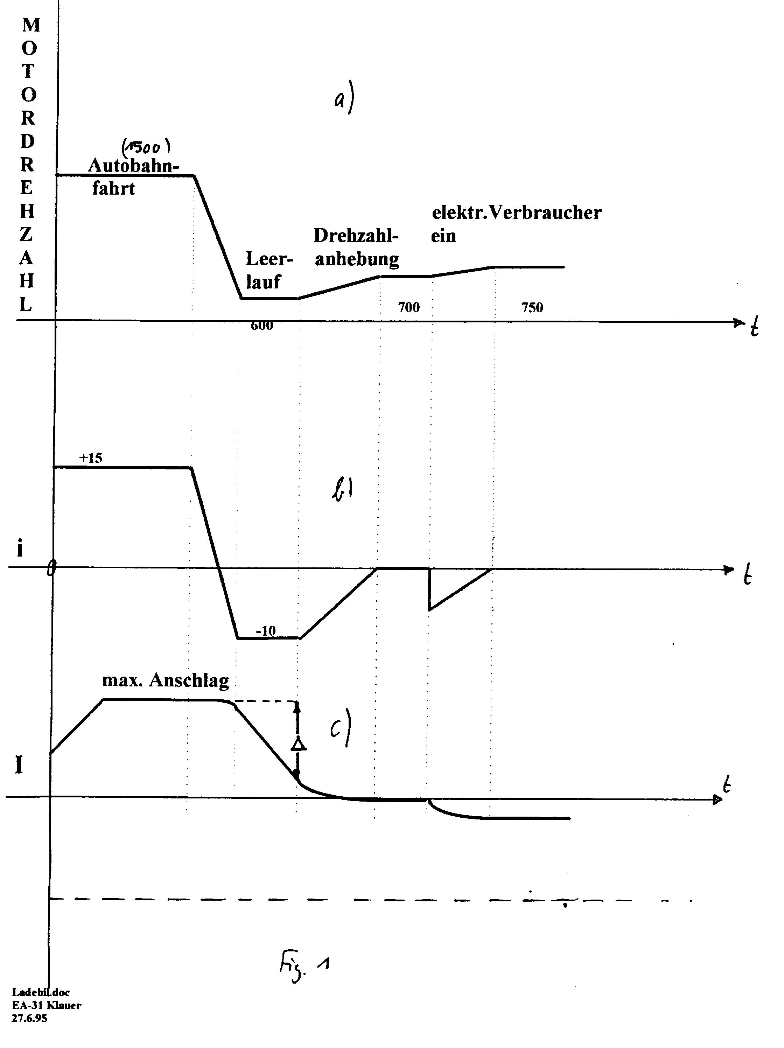

Im Diagramm a von Fig. 1 ist über die Zeit die Drehzahl eines Kraftfahrzeugs aufgetragen. Während einer ersten Zeitspanne von beispielsweise einer Stunde erfolgt eine Autobahnfahrt mit einer Durchschnittsdrehzahl von 1500 U/min. Bei einer anschließenden Stadtfahrt kommt es zu häufigen Ampelstops. Um die Wirkungsweise der Erfindung besonders deutlich zu machen, ist ein ununterbrochener Standbetrieb angenommen, in dem der Motor mit einer vorgegebenen minimalen Leerlaufdrehzahl von 600 U/min. betrieben wird.

Betrachtet man die im Diagramm b für diesen Betrieb gegenüber gestellte Ladebilanz, so ist während der Autobahnfahrt ein positives Ladungsangebot für den nicht dargestellten Akkumulator gegeben. Dies wird symbolisiert durch einen Wert +15, bei dem es sich um den Wert der Stärke des Ladestroms i in A (=Ampere) handeln kann. Am Ende der Autobahnfahrt ist der Akkumulator maximal geladen. Dies wird aus Diagramm c deutlich, das den Ladezustand des Akkumulators symbolisiert. Ausgehend von einem Zustand, in dem der Akkumulator noch nicht maximal geladen ist, erreicht er bedingt durch den Ladestromüberschuß seinen maximalen Ladezustand, den er bis zum Beginn der mit "Leerlauf" im Diagramm a bezeichneten Stadtfahrt beibehält.

Während dieser Leerlaufphase tritt ein negativer Ladestrom ein, d.h. die Batterie wird entladen. Dies wird im Diagramm b symbolisiert durch den negativen Verlauf und die Zahl -10, was soviel bedeutet wie die Stärke des Entladestroms. Dadurch verschlechtert sich der Ladezustand des Akkumulators. Hat sich dieser um einen definierten Wert Δ gegenüber dem Maximalwert verringert, so wird die Leerlaufdrehzahl des Motors kontinuierlich soweit angehoben, bis die Ladebilanz des Akkumulators ausgeglichen ist. Im Diagramm c zeigt sich dieser ausgeglichene Zustand durch einen waagrechten Verlauf der dargestellten Ladezustandskennlinie. Im Diagramm b ist dies durch einen Anstieg des Ladestroms auf den Wert Null zu erkennen. Null bedeutet dabei soviel wie, daß sich Lade- und Entladestrom gerade die Waage halten.

Im Diagramm a ist diese Drehzahlanhebung mit einer Erhöhung der Drehzahl von 600 auf 700 U/min. zu erkennen.

Werden zusätzlich elektrische Verbraucher eingeschaltet, so sinkt die Ladebilanzkennlinie im Diagramm c ab. Dieses Absinken wird jedoch aufgefangen, indem die Drehzahl des Motors von 700 auf 750 erhöht wird (Diagramm a), wodurch sich nach einem anfänglichen Einbruch des Ladestroms wieder eine allmähliche Erholung auf den Wert Null ergibt.

Damit ist ohne weiteres zu erkennen, daß gerade dann, wenn der Ladezustand des Akkumulators einen optimalen Wert besitzt, nicht unmittelbar auf die aktuelle Ladebilanz des Akkumulators abgestellt wird, sondern zunächst die Motordrehzahl auf einen minimalen Wert von 600 U/min gehalten wird, um den Kraftstoffverbrauch und damit die Umweltbelastung möglichst gering zu halten. Eine Drehzahlanhebung des Motors erfolgt nur dann, wenn die Ladebilanz unausgeglichen bleibt. Sie dient nur dem Ziel, Ladezustandsveschlechterungen des Akkumulators zu verhindern. Die dann unumgängliche Drehzahlanhebung erfolgt lediglich nur in dem Umfang, in dem es erforderlich ist, um den Ladestrom auf den Wert Null zu bringen. Dies geschieht selbst dann, wenn der Ladezustand des Akkumulators relativ weit vom Maximalzustand entfernt ist (vgl. den zeitlich zuletzt liegenden Teil der Ladezustandskennlinie). Nur dann, wenn der Ladezustand einen unteren Grenzwert zu unterschreiten droht, wird die maximal mögliche Leerlaufdrehzahl von beispielsweise 1000 U/min. eingestellt. Dieser untere Grenzwert ist im Diagramm c durch eine waagrechte strichlierte Linie symbolisiert.

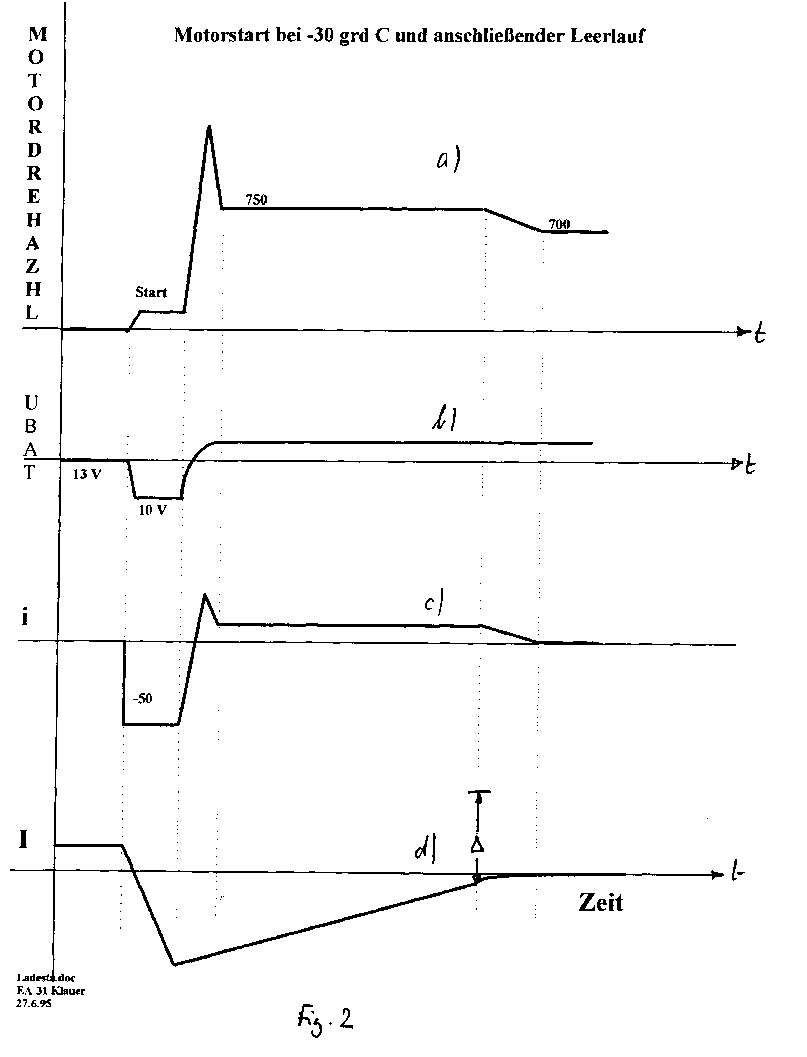

In Fig. 2 ist die Situation für einen extremen Belastungsfall des Akkumulators dargestellt. Es handelt sich dabei um einen Motorstart bei tiefer Temperatur und anschließendem Leerlauf. Der Verlauf der Motordrehzahl über der Zeit ist im Diagramm a dargestellt. Die Zahlenwerte 700 und 750 charakterisieren die auftretenden Motordrehzahlen.

Der im Diagramm c dargestellte Ladestrom ist während des Startvorgangs stark negativ und durch die Zahl -50 symbolisiert. Der Ladezustand, dargestellt im Diagramm d ist ebenfalls weit vom optimalen Zustand entfernt, im Gegenteil er verschlechtert sich während des Start-Vorgangs stark wie auch ein Vergleich mit dem Diagramm von Fig. 1 c zeigt.

Um für derartige Fälle eine Aussage über die Leistungsfähigkeit des Akkumulators zu erhalten und diese unter Berücksichtigung des Kraftstoffverbrauchs zu verbessern, wird ergänzend die Akkumulatorenspannung UBAT gemessen und berücksichtigt. Diese zeigt vor, während und nach dem Startvorgang den im Diagramm b gezeigten Verlauf und nimmt den Wert von 13, 10 und 14 V an. Der gemessene Wert von 10 V führt in Verbindung mit dem gemessenen Startvorgang dazu, daß die im Anschluß an den Start eingestellte Motordrehzahl einen Wert von 750 U/min. annimmt, um einen positiven Ladestrom (Diagramm c) über eine gewisse Zeitspanne von 10 min. zu erzeugen. Während dieser Zeit erholt sich der Ladezustand. Nähert er sich dem optimalen Wert an, wird die Leerlaufdrehzahl auf 700 reduziert. Dabei ist der Ladestrom i dann Null. Diese Annäherung wird durch das Symbol Δ im Diagramm d symbolisiert.

Im Unterschied zu bekannten Regelvorrichtungen für die Leerlaufdrehzahl des Motors wird nicht der aktuelle Lade-/ Entladestrom, sondern der Ladezustand des Akkumulators berücksichtigt. Dies zeigt sich in Fig. 2 darin, daß der Ladestrom i nach dem anfänglichen Ladebilanzeinbruch des Akkumulators durch Regelung der Motordrehzahl nicht auf den Wert Null, sondern auf einen positiven Wert gesetzt wird.

Die Bestimmung des Ladestroms i und damit der Ladebilanz I kann meßtechnisch mit Hilfe eines Stromwandlers erfolgen, der auf dem Pluskabel des Akkumulators sitzt. Der Ladestrom i kann aber auch indirekt durch Berücksichtigung der eingeschalteten Verbraucher wie der gemessenen Motordrehzahl und ggf. auch durch ergänzendes Messen der Akkumulatorenspannung UBAT erfolgen. Die Information über die eingeschalteten Verbraucher wiederum kann on-board mit Hilfe eines Datenbusses erfolgen, der einem Motorsteuergerät die Art und die Dauer der eingeschalteten Verbraucher mitteilt. Das Steuergerät ermittelt daraus, ggf. unter Berücksichtigung des Wertes der Batteriespannung modellhaft den Ladezustand des Akkumulators und regelt die Leerlaufdrehzahl wie dargestellt mit dem Ziel eines möglichst geringen Kraftstoffverbrauches.

## Patentansprüche

1. Verfahren zur Spannungsversorgung eines Kraftfahrzeugs mit einem Akkumulator, einem vom Motor des Kraftfahrzeugs angetriebenen Generator und einer Einrichtung zur Regelung der Leerlaufdrehzahl des Motors in Abhängigkeit vom jeweiligen Betriebszustand des Akkumulators, **dadurch gekennzeichnet, daß** bei optimalem Ladezustand des Akkumulators eine niedrige Leerlaufdrehzahl eingestellt und dabei eine negative Ladebilanz akzeptiert wird, solange der Ladezustand des Akkumulators einen kritischen Schwellwert nicht unterschreitet.

2. Verfahren nach Anspruch 1, dadurch gekennzeichnet, daß der Ladezustand aus der über die vorausgegangene Betriebsperiode bestimmte Ladebilanz ermittelt wird.

3. Verfahren nach Anspruch 1 oder 2, dadurch gekennzeichnet, daß die Leerlaufdrehzahl erst angehoben wird, wenn der Ladezustand einen Schwellwert unterschreitet.

4. Verfahren nach einem der Ansprüche 1 bis 3, dadurch gekennzeichnet, daß ergänzend die Akkumulatorenspannung zur Regelung der Leerlaufdrehzahl berücksichtigt wird.

5. Verfahren nach einem der Ansprüche 1 bis 4, dadurch gekennzeichnet, daß der Ladezustand unter Berücksichtigung der Akkumulatorentemperatur bestimmt wird.

6. Verfahren nach Anspruch 5, dadurch gekennzeichnet, daß der Akkumulatorentemperatur indirekt aus der Motortemperatur bestimmt wird.

7. Verfahren nach einem der Ansprüche 2 bis 6, dadurch gekennzeichnet, daß die Ladebilanz durch Information über die eingeschalteten Verbraucher bestimmt wird.

8. Verfahren nach Anspruch 7, dadurch gekennzeichnet, daß die Information über einen Datenbus geliefert wird, an dem die Verbraucher und der Generator anschlossen sind.

## Claims

1. A method of supplying voltage to a motor vehicle comprising a battery, a generator driven by the vehicle engine, and a device for adjusting the engine idling speed in dependence on the operating state of the battery at that time, characterised in that at the optimum battery charge the idling speed is set at a low value and a negative charge balance is accepted as long as the battery charge does not fall below a critical threshold value.

2. A method according to claim 1, characterised in that the charge is determined from the charge balance measured during the preceding operating period.

3. A method according to claim 1 or 2, characterised in that the idling speed is not raised until the charge falls below a threshold value.

4. A method according to any of claims 1 to 3, characterised in that in addition the battery voltage is taken into account when adjusting the idling speed.

5. A method according to any of claims 1 to 4, characterised in that the charge is determined with allowance for the battery temperature.

6. A method according to claim 5, characterised in that the battery temperature is measured indirectly via the engine temperature.

7. A method according to any of claims 2 to 6, characterised in that the charge balance is determined via information about the connected loads.

8. A method according to claim 7, characterised in that information is delivered by a data bus connected to the loads and the generator.

## Revendications

1. Procédé d'alimentation de tension pour un véhicule à moteur, avec un accumulateur, une génératrice entraînée par le moteur du véhicule à moteur et un système de régulation de la vitesse de rotation du moteur au ralenti en fonction de l'état respectif du fonctionnement de l'accumulateur,
caractérisé en ce que
quand l'état de charge de l'accumulateur est optimal on règle une vitesse de rotation au ralenti basse et ce faisant on accepte un bilan de charge négatif, tant que l'état de charge de l'accumulateur ne tombe pas en dessous d'une valeur critique de seuil.

2. Procédé selon la revendication 1,
caractérisé en ce que
l'état de charge est déterminé à partir du bilan de charge déterminé au cours de la période de fonctionnement précédente.

3. Procédé selon la revendication 1 ou 2,
caractérisé en ce que
la vitesse de rotation au ralenti est seulement relevée, quand l'état de charge tombe en dessous d'une valeur de seuil.

4. Procédé selon l'une des revendications 1 à 3,
caractérisé en ce que
en complément on prend en considération la tension de l'accumulateur pour régler la vitesse de rotation au ralenti.

5. Procédé selon l'une des revendications 1 à 4,
caractérisé en ce que
l'état de charge est déterminé en prenant en considération la température de l'accumulateur.

6. Procédé selon la revendication 5,
caractérisé en ce que
la température de l'accumulateur est déterminée indirectement à partir de la température du moteur.

7. Procédé selon l'une des revendications 2 à 6,
caractérisé en ce que
le bilan de charge est déterminé à l'aide d'une information sur les appareils consommateurs qui sont branchés.

8. Procédé selon la revendication 5,
caractérisé en ce que
l'information est délivrée par l'intermédiaire d'un bus de données, auquel sont raccordés les appareils consommateurs et la génératrice.
